# EUROPÄISCHE PATENTSCHRIFT

(11) **EP 2 975 739 B1**
(45) Veröffentlichungstag und Bekanntmachung des Hinweises auf die Patenterteilung: **18.10.2017**
(21) Anmeldenummer: 14177480.2
(22) Anmeldetag: 17.07.2014
(51) Int. Cl.: H02K 7/08, H02K 7/18

(54) **Dynamoelektrische Maschine mit Lageranordnung**
Dynamo-electric machine with bearing assembly
Machine dynamoélectrique avec système de palier

(43) Veröffentlichungstag der Anmeldung: 20.01.2016
(73) Patentinhaber: Siemens Aktiengesellschaft, 80333 München (DE)
(72) Erfinder: Hutzler, Mathias, 94060 Pocking (DE); Putz, Walter, 94060 Pocking (DE)

(56) Entgegenhaltungen:
- WO-A1-2009/127774
- WO-A1-2011/109659
- WO-A1-2012/013200
- DE-A1-102010 020 426
- US-A1- 2008 250 789

## Beschreibung

Die Erfindung betrifft eine dynamoelektrische Maschine mit einer Welle, die eine Antriebsseite zur Momentenübertragung an eine Arbeitsmaschine und eine Nicht-Antriebsseite aufweist, wobei diese Maschinenanordnung eine Lageranordnung dieser Welle aufweist.

Bei dynamoelektrischen Maschinen als Antrieb einer Arbeitsmaschine oder als Generator bei z.B. Windkraftgeneratoren wird die Welle mit dementsprechenden Lagern und Lageranordnungen ausgestattet. Dabei treten radiale Belastungen bei zum Teil sehr hohen Drehzahlen ein. Vorteilhafterweise werden dabei ölgeschmierte Gleitlager eingesetzt. Wälzlager können dabei nicht eingesetzt werden, da bei diesen Betriebszuständen die Wälzlager nur entweder hohe Radiallagerbelastungen aufnehmen können oder für hohe Drehzahlen ausgelegt sind.

Gleitlager hingegen können konstruktionsbedingt nur vergleichsweise geringe Axialkräfte bei kleiner Drehzahl aufnehmen.

Maschinenanordnungen, die nun einen Drehzahlregelbereich ab Null U/min hin zu sehr hohen Drehzahlen ca. 10000 U/min aufweisen, sind dementsprechend variierenden und/oder hohen Radial- und Axialkräften ausgesetzt.

Um axiale Belastungen und Kräfte bei ölgeschmierten Gleitlagerungen aufnehmen zu können, sind bisher spezielle axiale Anlaufflächen wie z.B. eingearbeitete Anlaufflächen oder kippbewegliche Segmente vorgesehen oder aber es wird eine Hydrostatik eingesetzt.

Nachteilig dabei ist, dass die aufgenommenen Kräfte hier sehr stark begrenzt sind und diese Ausführungen konstruktiv und damit finanziell sehr aufwändig sind.

Eine andere Möglichkeit diese Beanspruchung der Axialkräfte zu vermeiden, besteht darin, diese im Betrieb der dynamoelektrischen Maschine bzw. der Maschinenanordnung kritischen Drehzahlen, insbesondere der minimal möglichen Drehzahlen zu beschränken. Dies schränkt jedoch den Nutzer der Maschinenanordnung in seiner angestrebten Anwendung auf vorgegebene "Drehzahlfenster" ein. Die anderen Drehzahlbereiche dürfen nicht oder nur sehr kurz angefahren werden, um zu keinem Zeitpunkt axiale Kräfte auf die Lager der Maschinen ausüben zu können.

Radialkräfte treten z.B. auch bei Riemenantrieben auf, wobei Axialkräfte z.B. auch bei schrägverzahnten Getrieberitzeln oder nicht horizontalen also zumindest zeitweise "schiefem" Betrieb der Maschinenanordnung, wie z.B. auf Schiffen auftreten.

Das Dokument WO2009/127774 offenbart eine Dynamoelektrische Maschine mit einer Welle (14, Fig.2), die eine Antriebsseite zur Momentenübertragung an eine Arbeitsmaschine und eine Nicht-Antriebsseite aufweist, wobei eine Lageranordnung dieser Welle auf der Nicht-Antriebsseite der dynamoelektrischen Maschine eine Gleitlagerung (36) und eine Wälzlagerung (34) aufweist, indem die Welle über das Gleitlager hinaus, insbesondere mit reduziertem Durchmesser axial verlängert ist, wobei an dieser axialen Verlängerung das Wälzlager vorgesehen ist. Ausgehend davon, liegt der Erfindung die Aufgabe zugrunde, eine dynamoelektrischen Maschine mit einer Lageranordnung zu schaffen, bei der sowohl eine hohe Radiallast als auch eine hohe Axiallast über den gesamten möglichen Drehzahlbereich der dynamoelektrischen Maschine bzw. einer Maschinenanordnung aufgenommen werden kann.

Außerdem sollte die angestrebte dynamoelektrische Maschine mit Lageranordnung vergleichsweise kostengünstig zu realisieren sein.

Die Lösung der gestellten Aufgabe gelingt durch eine dynamoelektrische Maschine und deren Maschinenanordnung mit einer Welle, die eine Antriebsseite zur Momentenübertragung an eine Arbeitsmaschine und eine Nicht-Antriebsseite aufweist, wobei eine Lageranordnung dieser Welle auf der Nicht-Antriebsseite der dynamoelektrischen Maschine eine Gleitlagerung und eine Wälzlagerung aufweist.

Erfindungsgemäß wird dabei nun auf der Nicht-Antriebsseite der dynamoelektrischen Maschine die Welle, die die Arbeitsmaschine antreibt, über das/die Gleitlager hinaus verlängert. Die Arbeitsmaschine kann in diesem Zusammenhang auch eine Windturbine sein, die eine Welle eines Generators antreibt. Axialkräfte treten entweder durch Getriebe oder andere axiale Kräfte z.B. Windkräfte oder auch bei Kompressoren auf.

Diese Verlängerung der Welle auf der Nicht-Antriebsseite der Maschine wird vorteilhafterweise mit einem vergleichsweise geringen Durchmesser der Welle ausgeführt, so dass keine besondere Spezialanfertigung des Wälzlagers vorgesehen werden muss. Dieses Wälzlager nimmt bei sehr niederen Drehzahlen, ab einem Regelbereich von 0 U/min die Axialkräfte auf. Die Radialkräfte werden weiterhin durch das Gleitlager aufgenommen.

Vorteilhafterweise ist die Wälzlagerung als gepaartes Schrägkugellager ausgeführt, was besonders vorteilhaft die anstehenden Axialkräfte aufnehmen kann. Es sind aber auch andere Wälzlagerausführungen geeignet, die Axialkräfte aufnehmen können. Die Radialkraft der Maschine wird über die Gleitlagerung aufgenommen. Auf die Wälzlagerung wirkt nur eine minimal radiale Kraft. Das dadurch vergleichsweise kleine Wälzlager erlaubt somit sehr hohe Drehzahlen. Vorteilhafterweise kann damit nunmehr auf eine aufwändige und teuere Hydrostatik verzichtet werden, um die axialen Kräfte aufzunehmen.

Es können somit insbesondere aufgrund des vergleichsweise geringen Wellendurchmessers an der Nicht-Antriebsseite der dynamoelektrischen Maschine Standardkomponenten, wie z.B. Wälzlagerungen, Schrägkugellager etc. eingesetzt werden. Diese erlauben auch bei nahezu einer Drehzahl von 0 U/min also sehr langsamer Drehung die komplette Aufnahme der im Betrieb der dynamoelektrischen Maschine bzw. Maschinenanordnung auftretenden axialen Kräfte. Durch die erfindungsgemäße Anordnung sind weiterhin aber auch hohe Drehzahlen bei großer radialer Belastung der Lager möglich.

Das Wälzlager ist somit ein von der Radialkraft in der Maschine bzw. in der Maschinenanordnung weitestgehend entkoppeltes Wälzlager und wird erfindungsgemäß mit der Gleitlagerung kombiniert, um im Wesentlichen die axialen Kräfte über das Wälzlager und die radialen Kräfte über das Gleitlager aufnehmen zu können.

Besondere Anwendungen dieser dynamoelektrischen Maschine mit Lageranordnung sind erfindungsgemäß Windkraftgeneratoren mit und ohne Getriebe, Stellantriebe, d.h. Getriebemotoren und Kompressorantriebe, die auch bei vergleichsweise niederen Drehzahlen und hohen Drehzahlen eingesetzt werden und dementsprechende einfache, kostengünstige und wartungsarme Lageranordnungen aufweisen müssen.

Aufgrund der Eignung auch bei zumindest zeitweise "schiefen" Antriebsachsen Axialkräfte aufnehmen zu können, sind derartige Lageranordnungen für Anwendungen in Schiffen bei Generatoren oder Antriebsmotoren besonders geeignet.

Die Anzahl der Gleitlager und Wälzlager an der dynamoelektrischen Maschine bzw. der Maschinenanordnung ist dabei grundsätzlich nicht auf jeweils auf ein Lager beschränkt.

Die Erfindung sowie weitere vorteilhafte Ausgestaltungen der Erfindung werden anhand eines Ausführungsbeispiels näher erläutert. Darin zeigen:
- FIG 1: eine prinzipielle Maschinenanordnung,
- FIG 2: eine Anordnung auf der Nicht-Antriebsseite.

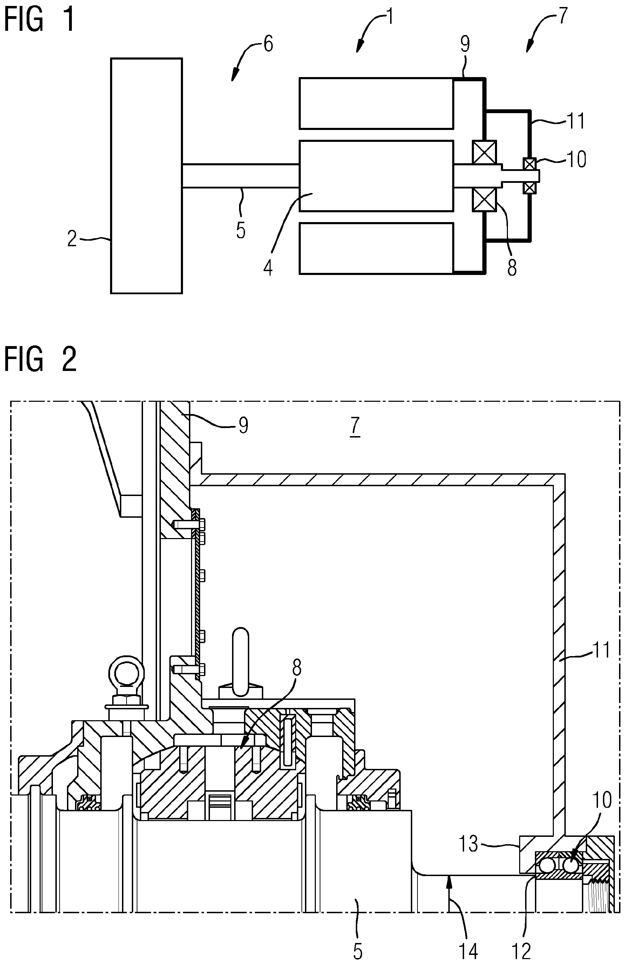

FIG 1 zeigt eine Maschinenanordnung mit einer prinzipiell dargestellten dynamoelektrischen Maschine 1, die einen nicht näher dargestellten Stator und einen nicht näher dargestellten Rotor 4 aufweist. Der Rotor 4 der dynamoelektrischen Maschine 1 kann dabei als Käfigläufer einer Asynchronmaschine oder als permanenterregter Läufer oder auch als Schenkelpolläufer ausgeführt sein. Der Rotor 4 ist mit einer Welle 5 drehfest verbunden. Die Welle 5 ist mit einer Arbeitsmaschine 2 verbunden, wobei die Arbeitsmaschine 2 sowohl ein von der dynamoelektrischen Maschine 1 angetriebenes Maschinenelement sein kann als auch ein Maschinenelement sein kann, das die Welle 5 antreibt und somit die dynamoelektrische Maschine 1 als Generator fungiert.

Generatoranwendungen sind somit insbesondere bei Windkraftanlagen vorgesehen. Anwendungen als Motor sind beispielsweise bei Kompressoren oder Schiffsantrieben vorgesehen. Bei Schiffantrieben werden dabei vor allem die durch Schiffschwankungen hervorgerufenen Axialkräfte aufgenommen.

Die Welle 5 ist auf der Nicht-Antriebsseite 7 insbesondere durch ein Gleitlager 8 gelagert, das - in dieser Darstellung - vor allem die radialen Kräfte der gesamten Maschinenanordnung aufnimmt. Auf der Antriebsseite 6 kann ebenfalls ein Gleitlager angeordnet sein, es kann aber auch so in dieser Darstellung gemäß FIG 1 eine fliegende Lagerung vorgesehen werden, so dass für eine zusätzliche Lagerung der dynamoelektrischen Maschine auf die Lagerung der Arbeitsmaschine zurückgegriffen wird.

Die Radialkraft der dynamoelektrischen Maschine 1 bzw. der Maschinenanordnung wird über die Gleitlagerung aufgenommen und zwar vom Drehzahlbereich 0 bis zur höchsten Drehzahl von einigen tausend Umdrehungen pro Minute. An das Lagerschild 9 des Gleitlagers 8 schließt sich eine Halterung des Wälzlagers 10 an, wobei das Wälzlager 10 auf einer axialen Wellenverlängerung in Richtung Nicht-Antriebsseite 7 positioniert ist. Vorteilhafterweise verjüngt sich der Durchmesser der Welle 5 in der axialen Richtung, weg von der dynamoelektrischen Maschine 1. An dieser Durchmesserreduzierung der Welle 5 sind die oder das Wälzlager 10 positioniert, die über eine Halterung 11 am Lagerschild 9 der Gleitlager 8 positioniert und fixiert sind.

FIG 2 zeigt die Nicht-Antriebsseite der dynamoelektrischen Maschine 1 in etwas detaillierterer Darstellung. Dabei ist die Gleitlageranordnung mit dem Lagerschild 9 dargestellt, wobei das gesamte Gleitlager 8 mit einigen Wellenabsätzen, Abdichtungen etc. gezeigt wird, die aber nicht den erfindungswesentlichen Bestandteil darstellen.

Ausgehend von der Gleitlagerung - in axialer Richtung betrachtet - ist in Richtung Wälzlager 10 eine Durchmesserreduzierung 14 der Welle 5 vorgesehen, auf der speziell an einem Absatz 12 das Wälzlager 5, insbesondere das Schrägkugellager positioniert ist. Das Schrägkugellager ist durch eine Halterung 11, die einen Absatz 13 aufweist an dem Lagerschild 9 befestigt. Bei axialen Kräften auf die Welle 5, während des Betriebs der dynamoelektrischen Maschine 1 bzw. der Maschinenanordnung, die das Gleitlager 8 nicht aufnehmen kann, wird nunmehr diese Kraft in das Schrägkugellager eingeleitet und dort aufgenommen.

Demzufolge ist das Gleitlager 8 lediglich für die radiale Kraftaufnahme zuständig, wobei das Wälzlager 10 aufgrund der Durchmesserreduzierung 14 der Welle 5 schon für hohe Drehzahlen ausgelegt ist und somit Standardkomponenten dieses Wälzlagers 10 einsetzbar sind.

Damit liegt eine Lageranordnung einer dynamoelektrischen Maschine 1 bzw. einer Maschinenanordnung mit einer dynamoelektrischen Maschine 1 und zumindest einer Arbeitsmaschine 2 vor, bei der ein von der Radialkraft weitestgehend entkoppeltes Wälzlager 10 und ein von der Axialkraft entkoppeltes Gleitlager 8 vorhanden ist.

Somit wird erfindungsgemäß mit einfachen Standardkomponenten eine Lageranordnung für die oben angewandten Verwendungen geschaffen, die einfach und wirtschaftlich die Erfordernisse einer dynamoelektrischen Maschine 1 bzw. einer Maschinenanordnung mit einem Regelbereich der Drehzahl Null bis zu hohen Drehzahlen erfüllt.

Aufgrund der Lageranordnung am axialen Ende der Welle 5 auf der Nichtantriebsseite sind Wartungsarbeiten bzw. ein Austausch der Lager - Wälzlager 10 und/oder Gleitlager 8 in einfacher Art und Weise möglich.

## Patentansprüche

1. Dynamoelektrische Maschine (1) mit einer Welle (5), die eine Antriebsseite (6) zur Momentenübertragung an eine Arbeitsmaschine (2) und eine Nicht-Antriebsseite (7) aufweist, wobei eine Lageranordnung dieser Welle (5) auf der Nicht-Antriebsseite (7) der dynamoelektrischen Maschine (1) eine Gleitlagerung (8) und eine Wälzlagerung (10) aufweist, wobei das Wälzlager (10) von einer Radialkraft entkoppelt ist und axiale Kräfte aufnimmt und das Gleitlager (8) von einer Axialkraft entkoppelt ist und radiale Kräfte aufnimmt, indem die Welle (5) über das Gleitlager (8) hinaus, insbesondere mit reduziertem Durchmesser axial verlängert ist, wobei an dieser axialen Verlängerung ein Wälzlager (10) vorgesehen ist, **das über eine Halterung (11) am Lagerschild (9) des Gleitlagers (8) positioniert und fixiert ist.**

2. Dynamoelektrische Maschine (1) nach Anspruch 1, **dadurch gekennzeichnet , dass** das Wälzlager (10) als Schrägkugellager ausgebildet ist.

3. Dynamoelektrische Maschine (1) nach einem der vorhergehenden Ansprüche, **dadurch gekennzeichnet, dass** diese Maschine bei Anordnungen einsetzbar ist, bei der hohe Radialkräfte und hohe Axialkräfte bei unterschiedlichsten Drehzahlen auf die dynamoelektrischen Maschine (1) wirken.

4. Kompressorantrieb, Schiffsantrieb oder Windkraftanlage mit einer dynamoelektrischen Maschine (1) nach einem der vorhergehenden Ansprüche 1 bis 3.

## Claims

1. Dynamo-electric machine (1) with a shaft (5) which has a drive side (6) for the transmission of torque to a driven machine (2) and a non-drive side (7), wherein a bearing assembly of said shaft (5) has a friction bearing (8) and an anti-friction bearing (10) on the non-drive side (7) of the dynamo-electric machine (1), wherein the anti-friction bearing (10) is decoupled from a radial force and takes up axial forces and the friction bearing (8) is decoupled from an axial force and takes up radial forces, in that the shaft (5) is axially extended beyond the friction bearing (8), in particular with a reduced diameter, wherein an anti-friction bearing (10) is provided on this axial extension, said anti-friction bearing (10) being positioned and fixed by way of a bracket (11) on the bearing shield (9) of the friction bearing (8).

2. Dynamo-electric machine (1) according to claim 1, **characterised in that** the anti-friction bearing (10) is embodied as an angular contact ball bearing.

3. Dynamo-electric machine (1) according to one of the preceding claims, **characterised in that** said machine can be deployed in assemblies in which high radial forces and high axial forces act on the dynamo-electric machine (1) at various rotational speeds.

4. Compressor drive, ship's drive or wind turbine with a dynamo-electric machine (1) according to one of the preceding claims 1 to 3.

## Revendications

1. Machine (1) dynamoélectrique comprenant un arbre (5), qui a un côté (6) moteur de transmission de couple à une machine (2) fournissant du travail et un côté (7) non moteur, un agencement de palier de cet arbre (6) ayant, du côté (7) non moteur de la machine (1) dynamoélectrique, un palier (8) lisse et un palier (10) à roulement, le palier (10) à roulement étant découplé d'une force radiale et absorbant des forces axiales et le palier (8) lisse étant découplé d'une force axiale et absorbant des forces radiales, par le fait que l'arbre (5) est prolongé axialement au-delà du palier (8) lisse, notamment en ayant un diamètre réduit, dans lequel il est prévu sur ce prolongement axial, un palier (10) à roulement, qui est mis en position et immobilisé sur le flasque (9) du palier (8) lisse par une fixation (11).

2. Machine (1) dynamoélectrique suivant la revendication 1, **caractérisée en ce que** le palier (10) à roulement est constitué sous la forme d'un roulement à bille oblique.

3. Machine (1) dynamoélectrique suivant l'une des revendications précédentes, **caractérisée en ce que** cette machine peut être utilisée dans des agencements, dans lesquelles des forces radiales et des forces axiales intenses agissent à des régimes différents sur la machine (1) dynamoélectrique.

4. Entraînement de compresseur, entraînement de bateau ou éolienne, ayant une machine (1) dynamoélectrique suivant l'une des revendications précédentes 1 à 3.
